(19) Europäisches Patentamt / European Patent Office / Office européen des brevets

(11) **EP 2 611 068 A1**

(12) **EUROPEAN PATENT APPLICATION**

(43) Date of publication:
**03.07.2013 Bulletin 2013/27**

(21) Application number: **11195954.0**

(22) Date of filing: **28.12.2011**

(51) Int Cl.:
*H04L 12/24* *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventors:
• **Pouyllau, Hélia
91620 NOZAY (FR)**

• **Le Sauze, Nicolas
91620 NOZAY (FR)**

(74) Representative: **Lebkiri, Alexandre et al
Cabinet Camus Lebkiri
87 Rue Taitbout
75009 Paris (FR)**

Remarks:
Amended claims in accordance with Rule 137(2) EPC.

(54) **Method for selecting a chain of service level specifications**

(57) The present invention relates to a method for selecting a chain of service level specification within a network according to end-to-end quality of service constraints profile of demand, said method comprising :
- receiving a request by a provider's network system related to a profile of demand from a customer equipment, said profile of demand comprising end-to-end quality of service constraints ;
- for said request, performing by said provider's network system :
- determining a first service level specification chain based on a plurality of quality of service values within a neural network associated with said profile of demand ;
- for a given state corresponding to said first set of chains of service level specifications :
- selecting a service level specification chain using a probability distribution over neural network quality of service values ;
- sending a request of availability for a service level specifications provided by a providers' network system, to at least one provider system involved in the service level specification chain ;
- if said service level specification chain may be provided by all the provider's network systems :
- sending said service level specification chain at a determined reward to said customer equipment ;
- if a negative answer for said service level specification chain is received from said customer equipment, resetting the reward ;
- computing a desire response of the set of chains of service level specifications using the reward, a discount factor, the quality of service value within the neural network corresponding to the first service level specification chain ;
- determining errors coming from the computing of said desire response and correcting said errors with a correction function ;

- if said service level specification chain may not be provided by all the provider's network systems, resetting the reward.

FIG. 2

EP 2 611 068 A1

**Description**

TECHNICAL FIELD

The present invention relates to a method for selecting a chain of service level specification within a network according to end-to-end quality of service constraints profile of demand. The invention also relates to a system for carrying out said method.
Such a method may be used for negotiation of service level specification between carriers when delivering inter-carrier services.

BACKGROUND OF THE INVENTION

Multimedia and critical inter-carrier services (e.g. video-conference, VPN, etc.) are becoming mainstream. However, nowadays such services can only be configured manually or be provisioned in a best-effort fashion. Moreover, establishing such services between remote end-points implies to be able to guarantee the end-to-end Quality of Service (QoS) required by the end-user or the remote carrier. To be guaranteed between a source and a target, the QoS is represented through service level specifications (SLSs), which are committed as service level agreements (SLAs) that aggregate thresholds on QoS parameters (e.g. delay < 50 ms, jitter < 30 ms, etc.) and other parameters (price, penalties, etc.). Thus, for an end-to-end service demand, each crossed domain has to commit an SLA. Hence, the service is guaranteed by a chain of service elements/SLAs/SLSs.
Besides the complexity of meeting end-to-end QoS constraints by combining SLSs - so called negotiation process, some other questions have to be considered. Carriers are independently administrated (they do not divulgate their topologies) and the committed SLAs are confidential.
When the number of SLS is very high, the number of SLS chains is accordingly huge. The problem of selecting a chain of SLSs among a huge set of discrete chains is equivalent to select a chain in a continuous space. Such a continuous space would have as dimensions the QoS parameters (e.g. bandwidth, delay, etc.) on which requirements are demanded by a customer. Learning techniques work by exploring infinitely the possible solutions. Hence, when such solutions belong to a continuous space, such techniques may not be computationally feasible.

SUMMARY OF THE INVENTION

It is an object of the invention to provide a method for selecting a chain of service level specification within a network according to end-to-end quality of service constraints profile of demand, which permits solving the above problem.
To this end, there is provided a method for selecting a chain of service level specification according to end-to-end quality of service constraints profile of demand, said method comprising:

- receiving a request by a provider's network system related to a profile of demand from a customer equipment, said profile of demand comprising end-to-end quality of service constraints ;
- for said request, performing by said provider's network system :

  - determining a first service level specification chain based on a plurality of quality of service values within a neural network associated with said profile of demand ;
  - for a given state corresponding to said first set of chains of service level specifications :

    - selecting a service level specification chain using a probability distribution over neural network quality of service values ;
    - sending a request of availability for a service level specifications provided by a providers' network system, to at least one provider system involved in the service level specification chain ;
    - if said service level specification chain may be provided by all the provider's network systems :

      - sending said service level specification chain at a determined reward to said customer equipment ;
      - if a negative answer for said service level specification chain is received from said customer equipment, resetting the reward ;
      - computing a desire response of the set of chains of service level specifications using the reward, a discount factor, the quality of service value within the neural network corresponding to the first service level specification chain ;
      - determining errors coming from the computing of said desire response and correcting said errors with a correction function ;

  - if said service level specification chain may not be provided by all the provider's network systems, resetting the reward.

As we will see in further details, the method proposes to apply neural networks as approximator for SLS chains and permits reducing the spatial search of SLS chains, hence reducing the needed memory representing the decision system.
In a first non-limitative embodiment, the method further comprises for said profile of demand, identifying by said provider's network system a set of chains of service level specifications such that each chain satisfies said end-to-end quality of service constraints to generate a neural network, said neural network of a profile of demand being composed of:

- an input layer with the service level specification chains as input values ;
- a hidden layer(s) with hidden values computed using an activation function ;

an output layer with output values representing the quality of service values.

In a second non-limitative embodiment, the output values are computing as following:

$$O_z = \sum_y Y_v . W1_{z,v}$$

where:

- $Y_v$ are the hidden values;
- $W1_{z,v}$ are first weights.

In a third non-limitative embodiment, the activation function is a sigmoid tangent equal to tanh

$$(\sum_u a_u . W2^T{}_{v,u}), \text{ where :}$$

- $a_u$ are the input values of the neural network of the demand profile ;
- $W2^T{}_{v,u}$ are second weights.

In a fourth non-limitative embodiment, the correction function comprises:

- for each output layer, computing a first factor being equal to the desire response minus the output value ;
- for each hidden layer, computing a second factor being equal to

$$\frac{1}{\cosh^2(Yv)} . \sum_z \delta_z . W1_{z,v} ,$$

where :

- $Y_v$ are the hidden values ;
- $\delta_z$ is the first factor ;
- $W1_{z,v}$ a first weigh.

- computing for each output layer associated with a hidden layer a first weigh $W1_{z,v}$ which is equal to

$W1_{z,v} + \alpha_t + \delta_z + Y_v$ with $\alpha_t$ being a learning rate decreasing over time ;
- computing for each hidden layer (v) associated with an input layer a second weigh $W2_{v,u}$ which is equal to $W2_{v,u} + \alpha_t + \delta_v + Y_v$ with $\alpha_t$ being said learning rate decreasing over time, and $\delta_v$ being the second factor.

In addition, there is provided a system for selecting a chain of service level specification within a network according to end-to-end quality of service constraints profile of demand, said system comprising a processor unit adapted to:

- receive a request related to a profile of demand from a customer equipment, said profile of demand comprising end-to-end quality of service constraints;
- for said request :

  - determining a first service level specification chain based on a plurality of quality of service values within a neural network associated with said profile of demand;
  - for a given state corresponding to said first set of chains of service level specifications :

    - selecting a service level specification chain using a probability distribution over neural network quality of service values ;
    - send a request of availability for a service level specifications provided by a providers' network system to at least one provider system involved in the service level specification chain ;
    - if said service level specification chain may be provided by all the provider's network systems :

      - send said service level specification chain at a determined reward to said customer equipment ;
      - if a negative answer for said service level specification chain is received from said customer equipment, reset the reward ;
      - compute a desire response of the set of chains of service level specifications using the reward, a discount factor, the quality of service value within the neural network corresponding to the first service level specification chain; and
      - determine errors coming from the computing of said desire response and correct said errors with a correction function;

    - if said service level specification chain may not be provided by all the provider's network systems, reset the reward.

In a non-limitative embodiment, the processor unit is further adapted to, for said profile of demand's request, identify a set of chains of service level specifications such that each chain satisfies said end-to-end quality of service constraints to generate a neural network, said neural network of a profile of demand being composed of:

- an input layer with the service level specification chains as input values ;
- a hidden layer(s) with hidden values computed using an activation function ;
- an output layer with output values representing the quality of service values.

In addition, there is provided a computer program product for a computer, comprising a set of instructions, which when loaded into said computer, causes the computer to carry out the method for selecting a chain of service level specification according to end-to-end quality of service constraints profile of demand as characterized according to any above characteristics.

BRIEF DESCRIPTION OF THE FIGURES

Some embodiments of methods and/or apparatus in accordance with embodiments of the present invention are now described, by way of example only, and with reference to the accompanying drawings, in which:

- Fig.1 illustrates a schematic organization chart of the method according to a non-limitative embodiment of the invention;
- Fig.2 illustrates a schematic representation of a continuous scheme supported by the method of Fig. 1;
- Fig.3 illustrates schematically a non-limitative embodiment of a neural network generated by the method of Fig. 1;
- Fig.4 illustrates the neural network of Fig. 3 with non-limitative examples values; and
- Fig.5 illustrates schematically a system which carries out the method of Fig. 1.

DESCRIPTION OF EMBODIMENTS OF THE INVENTION

In the following description, well-known functions or constructions by the man skilled in the art are not described in detail since they would obscure the invention in unnecessary detail.
The present invention relates to a method for selecting a chain of service level specification SLS within a network according to end-to-end quality of service constraints profile of demand D between a source node NDs (a border or edge router of a network) and a target node NDt (a border or edge router of a network).

For the following description, the following terminology is used.

- Network : network grouping several carrier networks.
- Inter-carrier or end-to-end service: A service that crosses several carrier networks.
- SLS/SLA (Service Level Specification/Service Level Agreement): A SLS is an offer of a carrier: it contains QoS guarantees and other information (e.g. a price, penalties in case of violation, etc.). A SLA is an instance of a SLS, i.e. a QoS contract between two partners. It contains the SLS information and also some instance-specific attributes like the duration, the partner ids, etc.
- Request Rq : an inter-carrier service request of a customer (end-user or other carrier) for a profile of demand. A request is therefore an instance of a profile of demand.
- Profile of demand d:. A QoS chosen by a customer. These demands may be normalized by the providers, in order to restrain combinatorial explosion when treating a request. A profile of demand d doesn't accept specific entry values. Furthermore, its QoS values depend of the ending application (videoconference, games etc.) and of a level of QoS (high, intermediate, etc.).
- SLS chain: a combination of SLSs that guarantee an inter-carrier service. Such a chain is computed and negotiated for each request.
- Per-request revenue: the revenue brought by the satisfaction of each request independently. The revenue brought by one request might be for instance the price of its corresponding SE chain. The per-request revenue is different than global revenue which is the revenue brought when satisfying all requests jointly.
- The words carrier, provider and operator are used interchangeably.

As will be described hereinafter, the method uses a neural network NNd, representing the SLS negotiation decision model, in order to approximate a reinforcement learning algorithm (such as O-learning or SARSAT™) launched by a third party. The learning algorithm permits the third party to find (or determine) a policy $\pi$ that identifies the criterion associating an SE chain with a customer request (in other words, on which criterion an action is taken at a given state). The goal of the third party is to find the policy $\pi^*$ that maximizes the global revenue for several scenario executions occurring with different customers. Approximating functions allows obtaining function values without storing them in memory. Furthermore, the method permits supporting a continuous representation of SLS instead of a discrete representation. It treats a set of discrete SLSs as a set of continuous SLSs by approximating said SLSs. Supporting a continuous representation of SLSs allows to deals with scalability issues when the number of SLSs published is high.

The method for selecting a chain of service level specification SLS within a network NT according to end-to-end quality of service constraints profile of demand D between a source node NDs and a target node NDt is executed as following.

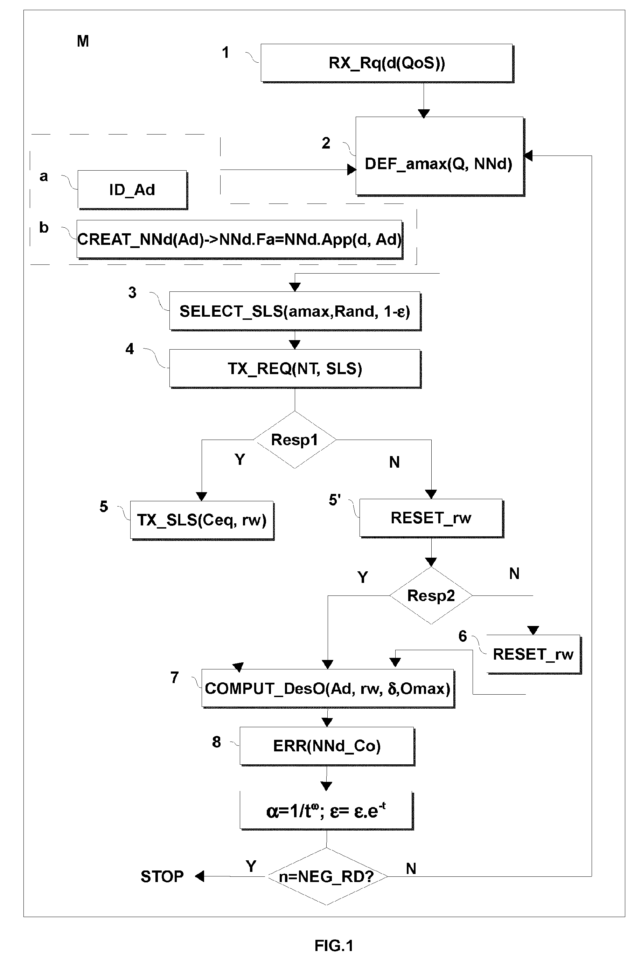

Said method comprises as illustrated in Fig. 1:

**In a first step 1)**, a request Rq related to a profile of demand d is received from a customer equipment Ceq, said profile of demand d comprising end-to-end quality of service constraints (step RX_Rq(d(QoS)). It is to be noted that this request Rq comprising a profile demand d, is received at time t+1 for example.

In a non-limitative embodiment, a system of an operator which is a provider receives such a request Rq. In non-limitative examples, such a system is an OSS ("Operations Support System") of a provider or a centralized system. Said centralized system is for example the OSS of the provider who is in relation with the customer.

It is to be noted that the provider system which received said request Rq will also be called first provider system or first OSS in the rest of the description. It is to be noted that customer demands are normalized in order to define profiles of demands d. Let $D$ a set of demand profiles, each profile demand $d \in D$ is associated to a vector $\left(b_k^d\right)_{k=1,...,K}$ representing the end-to-end required QoS.

In a non-limitative example, such a demand d1 comprises the following end-to-end requirements QoS for data transmission: delay - 110ms and bandwidth = 1 Gbit/s. Another demand d2 comprises: delay = 120ms and bandwidth = 2Gbits/s.

**In a second step 2)**, for said request Rq, a first service level specification chain $a_{max}$ is determined based on a plurality of quality of service values Q within a neural network (NNd) associated with said profile of demand d.

In a non-limitative embodiment, for said request Rq, a first service level specification chain $a_{max}$ is defined, which is equal to the maximum argument of the quality of service values Q within the neural network NNd, that is to say the output values Oz (step DEF_amax(Q, NNd)).

In a non-limitative embodiment, said step is performed by the first OSS.

Creation of the neural network.

The neural network is created as following. It is to be noted that the creation of a neural network may be performed off-line, that is to say outside the use of the system. For example if a new profile of demand d is created, the neural network will be constructed before publishing said profile d.

**In a first step a)**, for said profile of demand's d, a set of chains of service level specifications Ad is identified such that each chain satisfies said end-to-end quality of service constraints QoS to generate a neural network NNd (Step ID_Ad).

Any algorithm which may compute a constraint path (the sets of chains) may be used to identify a set of chains Ad, such as in non-limitative embodiments an enumeration algorithm, a constraint system programming algorithm, a dikjstra algorithm etc. Such algorithms are well-known by the man skilled in the art and won't be described here.

It is to be noted that each carrier $i =1,...,N$ publishes a set of service level specifications SLS, denoted $SLS^i$ . Each $SLS\ s^{i,j} \in SLS^i$ , $j =1,..., |SLS|^i$ (where $|SLS^i|$ is the number of SLS published by carrier i) is associated to :

　　o A vector of numerical components $\left(q_k^{i,j}\right)_{k=1,...,K}$ representing thresholds over K identified QoS parameters.

　　o A set of ingress and egress nodes, denoted $in^{i,j}$ and $eg^{i,j}$ respectively. These nodes (edge of border routers) are used when constructing beforehand the sets of chains of SLSs proposed by the carrier.

Thus, the selection of the set of chains of SLS is performed among the published SLS by the carriers.

$A$ is defined as a set of actions, each $a \in A$ is defined as a SLS chain for a received request Rq. An action $a \in A$ is coded as a vector of thresholds over K dimensions (the QoS parameters).

In a non-limitative example, the set of SLS chains (actions) identified for the demand d1 is:

- 　a1= S11 - S21 -S31 to perform a demand for 30ms, 5Gbits
- 　a2= S11 - S21 -S31 to perform a demand for 30ms, 1 Gbits
- 　a3= S11 - S21 -S31 to perform a demand for 100ms, 1 Gbits

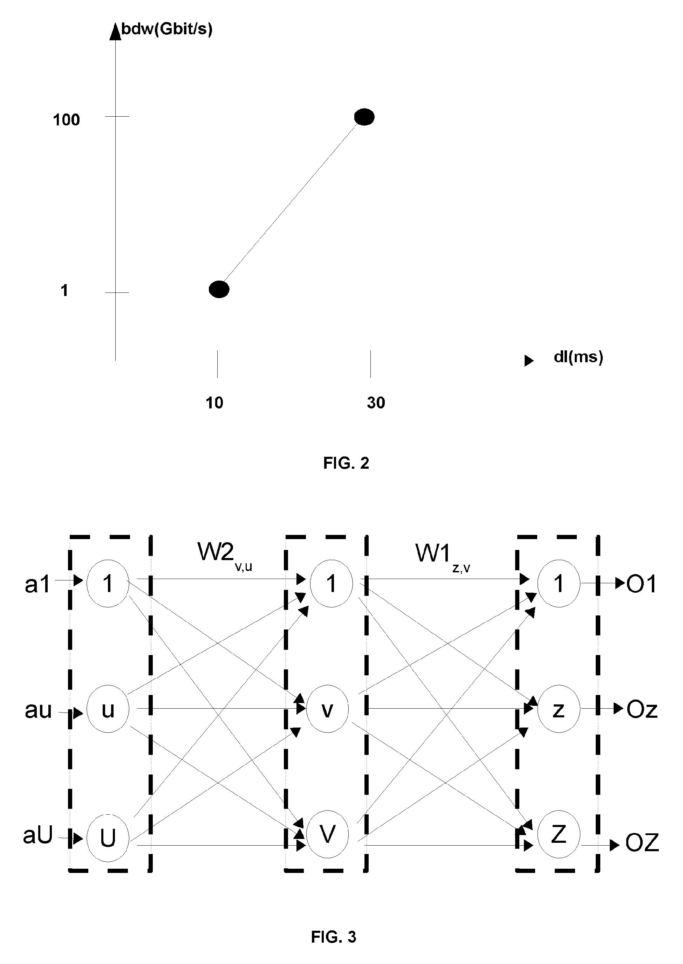

Fig. 2 illustrates a continuous space which has two dimensions as the SLS chains are composed of two QoS parameters in the non-limitative example given. The X-axis represents the delay dl (ms) and the Y-axis represents the bandwidth (Gbit/s).

**In a second step b)**, a neural network NNd is created for said demand profile d (step CREAT_NNd (Ad)) as following and illustrated in Fig. 3.

It is to be noted that a neural network NNd is not constructed for each request Rq (otherwise this would lead to a huge amount of neural network) but for each demand profile d.

Fig. 3 illustrates in a non-limitative example, a neural network created with three layers.

The neural network NNd is composed of:

- at least one input layer (u =1,..., U) with the service level specification chains a as input values $a_u$, each chain (or action) $a_u \in A_d$ of the set of SLS chains $A_d$ satisfying QoS requirements of said demand profile $d \in D$. It is to be noted that the set $A_d$ can have only one element or a plurality of elements. Said elements can be still represented as vector or normalized into a single value using a scalar product (for instance using another vector of weights over QoS parameters).
- at least one hidden layer(s) (v =1,..., V) with hidden values $Y_v$ computed using an activation function (NNd.Fa). In the non-limitative example illustrated in Fig. 2, the neural network NNd comprises one hidden layer v.
  It is to be noted that a neural network might have one or several hidden layers, and different "activation" functions may be used ;
- at least one output layer(s) (z =1,..., Z) with output values $O_z$ representing quality of service values $Q(s,a)$. Hence, a neural network $NN_d$ gives, for one or several actions (chain), the corresponding Q(s, a) values.

It is to be noted that the input values are also called input neurons, and the output values are also called output neurons. Synapses are connections between an input layer and a hidden layer, and between a hidden layer and an output layer. Data are sent from an input layer of input neurons to a hidden layer of neurons via some synapses, and then via more synapses to the output layer of output neurons. The synapses store parameters which are the weights that manipulate the data in the calculations.

A first method associated to a neural network NNd is the method to approximate Q(s,a) values. We denote this method NNd.App(d, Ad). The approximate method NNd.App(d, Ad) has the following steps:

- for each output layer z associated with a hidden layer v associating a first weight $W1_{z,v}$;
- for each hidden layer v associated with an input layer u associating a second weight $W2_{v,u}$;
- computing hidden values $Y_v$, v=i,...,V, using the activation function $NNd.F_A$ which is in a non-limitative embodiment a sigmoid tangent equal to tanh

$$( \sum_u a_u . W2^T{}_{v,u} ) ,$$ , where :

- $a_u$ are the input values (SLS chains) of the neural network NNd of the demand profile D ;
- $W2^T{}_{v,u}$ are second weights (defined for a given profile demand d).

- computing output values $O_z$ as following:

$$O_z = \sum_y Y_v . W1_{z,v}$$

with Yv the hidden values and W1z,v are first weights (defined for a given profile demand d).

It is to be noted that the weights are initialized and computed by the system (for example OSS) of the provider which is in contact with the client and which implements the process for selecting a SLS. Said weights are computed as following.
For each z = 1,..., Z, v = 1,..., $V W1_{z,v} = W1_{z,v} + \alpha_t \cdot \delta_z \cdot Y_v$
For each v=1,...,V u =1,...,U > $W2_{v,u} = W2_{v,u} + \alpha_t \cdot \delta_v \cdot Y_v$
In a non-limitative embodiment, the weights W1z,v and W2v,u are initialized randomly between zero and one.

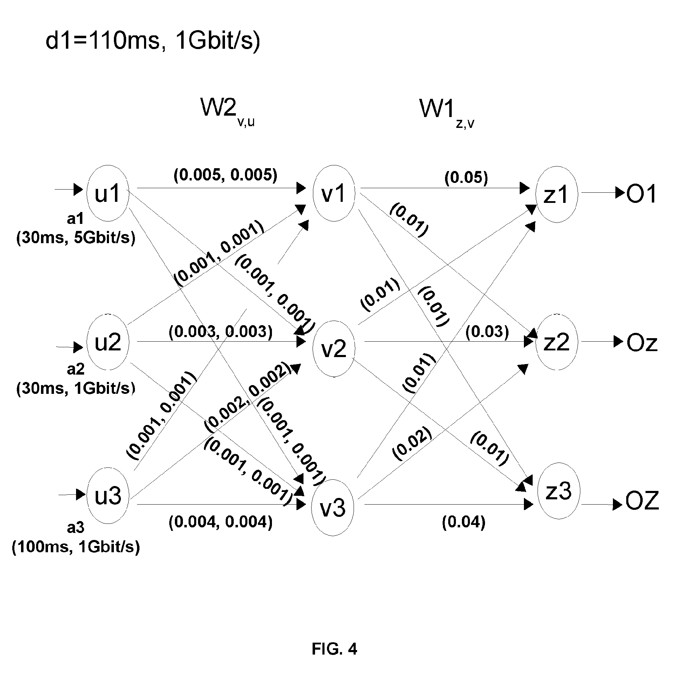

Figure 4 gives a numerical example of the execution of this approximation process by fig 2. Note that W2 and W1 weights are defined for a given profile demand ("d=(110ms, 1 Gbit/s) ").

As illustrated in Fig. 3, in a non-limitative example:

- for the synapse connecting the first input layer u1 with the first hidden layer v1, a second weight W2$_{v,u}$ equal to 0.005, 0.005 is associated ;
- for the synapse connecting the first input layer u1 with the second hidden layer v2, a second weight W2$_{v,u}$ equal to 0.001, 0.001 is associated ;
- for the synapse connecting the first input layer u1 with the third hidden layer v3, a second weight W2$_{v,u}$ equal to 0.001, 0.001 is associated, , and so on for the other combinations of input and hidden layers ;
- for the synapse connecting the first hidden layer v1 and the first output layer z1, a first weight W1$_{z,v}$ equal to 0.05 is associated ;
- for the synapse connecting the first hidden layer v1 and the third output layer z3, a first weight W1$_{z,v}$ equal to 0.01 is associated, and so on for the other combinations of hidden and output layers.

When a neural network NNd is created, the first service level specification chain $a_{max}$ can be defined.
For example, in the Fig. 4 the SLS chain 03 is defined as the first SLS $a_{max}$. It is to be noted that $a_{max}$ is an action which has a maximum value $O_{max}$ within the approximate neural network NNd, that is to say a SLS chain.
In other words, $a_{max}$ corresponds to the action a for which the value O is the maximum.
Within the neural network NNd, a set of values O are calculated function of the type of profile demand d and the most interesting SLS chain corresponding to said O values is retrieved.

Then, the following steps are performed for a given state S corresponding to said first set of chains of service level specifications Ad.

**In a third step 3)**, one selects a service level specification chain a using a probability distribution over neural network quality of service values Q.

In a non-limitative embodiment, given a determined probability $1-\varepsilon$, a service level specification chain a equal to the first one found $a_{max}$ is selected (step SELEC_SLS(amax, Rand, $1-\varepsilon$)). Hence, if the probability is superior to $\varepsilon$, one chooses $a_{max}$. If the probability is inferior or equal to $\varepsilon$, one randomly chooses a sls chain a.

For example, the SLS chain $O3=a_{max}$ is selected.

It is to be noted that $\varepsilon$ is initialized by the system SYS (for example OSS) of the provider which is in contact with the client and which implements the process for selecting a SLS. Said system selects also said chain a.

**In a fourth step 4)**, a request of availability REO for a service level specifications SLS provided by a providers' network NT system SYSp is sent to at least one provider system (SYSp) involved in the service level specification chain a (step TX_REQ(NT, SLS)).

In a non-limitative embodiment, a provider's system SYSp is an OSS ("operation Support System").

This request permits checking if said SLS chain may be supported and is accepted by all the network's providers' systems.

In the case of a centralized system, the first provider system SYSp will send a request of availability REO to all the provider systems SYSp involved in the service level specification chain a.

In the other case, the first provider system SYSp will send a first request of availability REQ1 to another second provider system SYSp, said first request of availability comprising the total QoS required in the customer request Rq minus the Qos in the available SLS proposed by said first provider system SYSp (for example 100ms minus 10ms). Then, said second provider system SYSp will send a second request of availability REQ2 to another third provider system SYSp, said second request of availability comprising the QoS in the first request REQ1 minus the Qos in the available SLS proposed by said second provider system SYSp (for example 90 ms minus 20ms) and so on.

It is to be noted that as the first provider system SYSp is aware of the target node to be reached, it is aware of the different chains of SLSs which permit to reach said target node for said demand of profile d, and therefore it is aware of which second provider system SYSp it has to send the request REQ1. If said first provider system SYSp has different possibilities (chains of SLSs) to fulfill the demand of profile d, it can carry out the described method for selecting a chain of SLS as many times there are some possibilities, and read out which chain of SLS is the best for said demand of profile d.

It is to be reminded that the first provider system is the provider system proposing the SLS chain to said customer, that is to say that is linked to the customer and that wants to construct the SLS chain for his customer.

It is to be noted that the SLS provided by each provider's system SYSp is published in the network NT.

It is to be noted that a provider provides a unique SLS for a SLS chain.

Hence, each provider system SYSp answers an availability request REQ for the SLS it provides and tells the first provider system SYSp if it can make it available for the SLS chain selected.

The first provider system SYSp receives the answers of the provider systems SYSp involved in the SLS chain selected, answers about the availability of the SLS they provided.

**In a fifth step 5)**, if said service level specification chain a may be provided by all the providers of the network NT (Resp1=Y) system SYS (that is to say each provider may make available a SLS of said chain it can provides), said service level specification chain a is sent at a determined reward rw to said customer equipment Ceq (step TX_SLS(Ceq, rw)) to propose the SLS chain to the customer. The reward rw is a function representing the instantaneous revenue brought by the allocation of a SLS chain to a request Rq. It might be the price or the cost (then maximization must be turned into minimization), or any other relevant value for carriers, etc. The reward rw is therefore the sum of the revenues of the different SLS of the chain chosen. The revenues are fixed by the operator. It represents the gain according to the answer of the customer equipment Ceq.

Said first OSS sends said SLS chain a at said determined reward rw.

If said service level specification chain a can't be provided by all the provider's network NT systems SYSp, the reward rw is reset, that is to say, if one negative answer (RESP1=N) (step 5') for one of the service level specification SLS of said service level specification chain a is received by said first provider system SYSp, the reward rw is reset (RESET_rw), (at least one provider can't make available one SLS of the chain for said request). Then a new set of chains of service level specifications Ad may be chosen (step ID_Ad) and the steps of treating a new state S may be reiterated.

It is to be noted that all these steps described above 2 to 4 are reiterate while no accurate service level specification chain a has been approved by the customer equipment Ceq or a determine number NEG_RD of iterations has not be reached (n < NEG_RD).

In the case of all the answers are positive (RESP1=Y), the following steps are performed.

**In a sixth step 6),** if a negative answer (Resp2=N) for said service level specification chain a is received from said customer equipment Ceq (the customer doesn't accept the SLS proposed chain), the reward rw is reset. Hence, if the SLS chain 03 has not been approved as illustrated in the not limited example, the reward rw is set to zero (step RESET_rw) ;

Then, the following steps are performed. They permit to adapt the future proposition of another SLS chain that will be sent to the customer equipment Ceq according to said answer and to modify the neural network NNd in consequence.

In this case, and in the case a positive answer (RESp = Y) is received from the customer equipment (the customer has accepted the proposed SLS chain), the following steps are performed by said first OSS.

**In a seventh step 7)**, a desire response DesO of the set of chains of service level specifications Ad is computed using the reward rw, a discount factor $\gamma$, the quality of service value $O_{max}$ within the neural network NNd corresponding to the first service level specification chain $a_{max}$.

In a non-limitative embodiment, the desire response DesO of the set of chains of service level specifications Ad is computed which is equal to the sum of the reward rw and, a discount factor $\gamma$ multiplied by the quality of service value $O_{max}$ within the neural network NNd corresponding to the first service level specification chain $a_{max}$ (step COMPUT_DesO(Ad, rw, $\delta$, Omax)). DesO=rw+$\gamma$.$O_{max}$. It is to be noted that this discount factor $\gamma$ represents the importance of the future gains (for example if $\gamma$=1, it represents long term objectives, if $\gamma$=0 it represents short-term objectives). With $\gamma$, one can anticipate the future gain of the providers, taking into account different requests coming from one or a plurality of clients, requests which are received along the time. Hence, the choice of a SLS chain for a request takes into account the future gain, that is to say if the other requests will ask or not for more resources. Therefore, O represents the expected gain (the optimal gain for a request at a time), Omax represents the expected future gain and the desire response DesO represents the desire reward at a time and the future reward.

It is to be noted that Omax is weighted by $\gamma$ according to the importance one wants to give to Omax.

It is to be noted that when y= 0, the future gain is not taken into account.

**In an eighth step 8)**, errors are determined coming from the computing of said desire response DesO and corrected with a correction function NNd.Co (Step ERR(NNd_Co)). Said step permits correcting the computed estimations.

In a non-limitative embodiment, the correction function NNd.Co comprises:

- for each output layer z, computing a first factor $\delta_z$ being equal to the desire response DesO minus the output value Oz ;
- for each hidden layer v, computing a second factor $\delta_v$ being equal to

$$\frac{1}{\cosh^2(Yv)}.\sum_z \delta_z.W1_{z,v} ,$$

where :

- $Y_v$ are the hidden values ;
- $\delta_z$ is the first factor ;
- $W1_{z,v}$ a first weight;

- $\dfrac{1}{\cosh^2(Yv)}$ is the derivative of tanh.

- computing for each output layer z associated with a hidden layer v a first weight $W1_{z,v}$ which is equal to $W1_{z,v} + \alpha_t + \delta_z + Y_v$ with $\alpha_t$ being a learning rate decreasing over time ($0 < \alpha_t < 1$). It is to be noted that this learning rate $\alpha_t$ can be updated ($\alpha \leftarrow 1/t^\omega$) after each profile of demand request Rq treatment (when $\alpha_t$ is closed to 0, the method doesn't learn any more). In a non-limitative embodiment, $\alpha_t$ is equal to 0,5. It is to be noted that $\alpha_t$ is updated by the system (for example OSS) of the provider which is in contact with the client and which implements the process for selecting a SLS.
- computing for each hidden layer v associated with an input layer u a second weight $W2_{v,u}$ which is equal to $W2_{v,u} + \alpha_t + \delta_v + Y_v$ with $\alpha_t$ being a learning rate decreasing over time, and $\delta_v$ being the second factor.
- Then, the learning rate $\alpha$ is updated such that $\alpha = 1/t^\omega$ and the determined probability 1-$\varepsilon$ is updated such that $\varepsilon= \varepsilon.e^{-t}$.

When the neural network NNd has been updated with the correction function NNd.Co, a new set of chains of service level specifications Ad may be chosen (step DEF_amax(Q, NNd)) and the steps of treating a new state S may be reiterated.

It is to be noted that in this case, the steps a) and b) described for the creation of a neural network are not performed as the neural network has already been created for the demand of profile d.

It is to be noted that all these steps described above 2 to 4 are reiterate while no accurate service level specification chain a has been approved by the customer equipment Ceq or a determine number NEG_RD of iterations has not be reached (n < NEG_RD).

Therefore, for each profile of demand d, the method permits collecting the different responses of the customer equipment Ceq and permits defining a customer profile based on the responses. It permits anticipating the future request Rq as one knows which SLS chains are available to satisfied said request Rq.

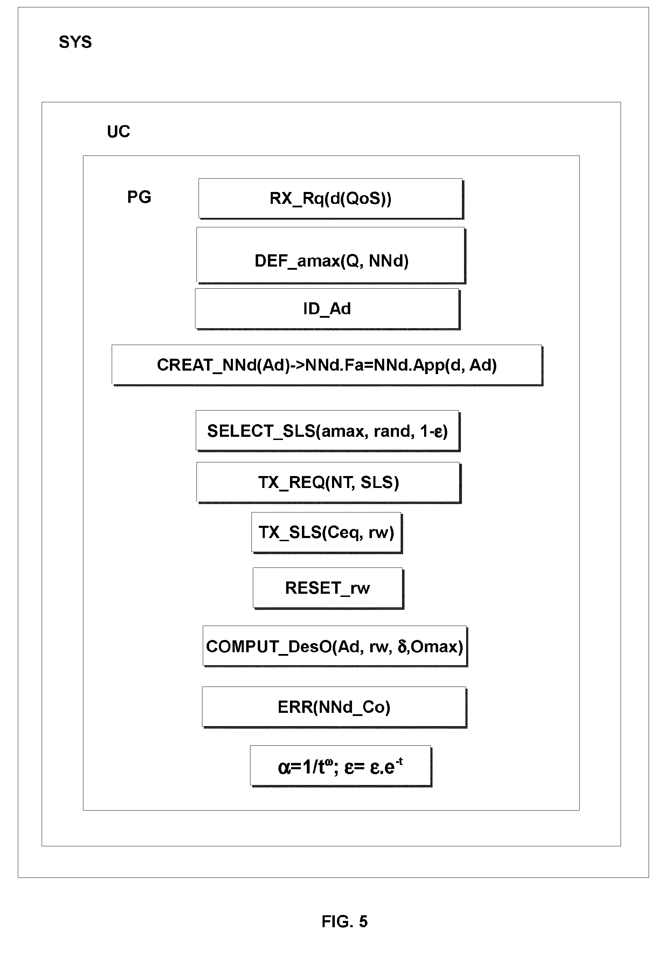

The method M is carried out by a system SYS as illustrated in Fig. 5.

Said system SYS for selecting a chain of service level specification SLS within a network NT according to end-to-end quality of service constraints profile of demand D, said system comprising a processor unit UC adapted to:

- receive a request related to a profile of demand d from a customer equipment Ceq, said profile of demand comprising end-to-end quality of service constraints QoS ;
- for said request Rq :

  - determine a first service level specification chain $a_{max}$ based on a plurality of quality of service values Q within a neural network NNd associated with said profile of demand d ;
  - for a given state S corresponding to said first set of chains of service level specifications Ad :

    - while no accurate service level specification chain a has been approved and a determine number NEG_RD of iterations has not be reached :

      - ;select a service level specification chain a using a probability distribution over neural network quality of service values Q ;
      - send a request of availability Req for the service level specifications SLS provided by a providers' network NT system SYSp) to at least one provider system SYSp involved in the service level specification chain a ;
      - if said service level specification chain a may be provided by one provider's network NT :

        - send said service level specification chain a at a determined reward rw to said customer equipment Ceq systems SYSp ;
        - if a negative answer for said service level specification chain a is received from said customer equipment Ceq; resetting the reward rw ;
        - compute a desire response DesO of the set of chains of service level specifications Ad using the reward rw, a discount factor $\gamma$, the quality of service value $O_{max}$ within the neural network NNd corresponding to the first service level specification chain $a_{max}$ ;
        - determine errors coming from the computing of said desire response DesO and correct said errors with a correction function NNd.Co.

    - if said service level specification chain a may not be provided by all the provider's network NT systems SYSp, reset the reward rw (that is if one negative answer for one of the service level specification SLS of said service level specification chain a is received).

In a non-limitative embodiment, said system is an OSS ("operation Support System") and is administrated by a provider which is in contact with a customer. Hence, each provider which proposes a SLS and is in contact with a customer comprises such a system.

The functions of the various elements shown in the Fig. 5, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is to be understood that the present invention is not limited to the aforementioned embodiments and variations and modifications may be made without departing from the scope of the invention. In the respect, the following remarks are made.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

There are numerous ways of implementing functions of the method M by means of items of hardware or software, or both, provided that a single item of hardware or software can carry out several functions. It does not exclude that an assembly of items of hardware or software or both carry out a function.

Said hardware or software items can be implemented in several manners, such as by means of wired electronic circuits or by means of a computer program product that is suitable programmed respectively. One or a plurality of computer program products PG can be contained in a computer or in the system SYS as illustrated in Fig. 5, said system comprising a unit control UC, said unit control being hardware or software items as above stated.

The computer program products PG comprise a set of instructions.

Thus, said set of instructions contained, for example, in a computer programming memory or in a system memory, may cause the computer or the system SYS to carry out the different steps of the method M. In a non-limitative example,

The set of instructions may be loaded into the programming memory by reading a data carrier such as, for example, a disk. A service provider can also make the set of instructions available via a communication network such as, for example, the Internet.

Hence, some embodiments of the invention may comprise one or a plurality of the following advantages:

- the invention can be used for the negotiation of SLS between carriers to significantly improve the revenues obtained when delivering inter-carrier services. It could also be used by an operator to deal with its own clients and its third-party providers (e.g. Cloud Computing providers).

- the invention significantly improves the performance and resolution capabilities of learning algorithms applied to the addressed problem. It allows handling a large number of Service Level Specification and more generally a large number of QoS offers. Without the method above described, the decisional process of SLA selection would not scale.

- the invention proposes a method to take into account huge number of SLAs and select them taking into account the likeliness of acceptance of the customer and the service providers.

- the invention is a method to be implemented in B/OSS - Business/Operation Support System, or Market Place APIs for which customer/provider interaction is a key issue in the delivery of a guaranteed service. Because many different systems use SLSs and SLAs to represent their resources in an abstract manner, this likelihood is very high: it could be used by any negotiation mechanisms that deals with SLA (e.g. IMS - Information Management Services, CDNs - Content Delivery Network, Cloud Computing, Application providers in a broad sense).

Any reference sign in the following claims should not be construed as limiting the claim. It will be obvious that the verb "to comprise" and its conjugations do not exclude the presence of any other steps or elements beside those defined in any claim. The word "a" or "an" preceding an element or step does not exclude the presence of a plurality of such elements or steps.

## Claims

1. A method (M) for selecting a chain of service level specification (SLS) within a network (NT) according to end-to-end quality of service constraints profile of demand (d), said method comprising :

    - receiving a request (Rq) by a provider's network system (SYSp) related to a profile of demand (d) from a customer equipment (Ceq), said profile of demand (d) comprising end-to-end quality of service constraints (QoS) ;
    - for said request (Rq), performing by said provider's network system (SYSp) :

        - determining a first service level specification chain ($a_{max}$) based on a plurality of quality of service values (Q) within a neural network (NNd) associated with said profile of demand (d) ;
        - for a given state (S) corresponding to said first set of chains of service level specifications (Ad) :

            - selecting a service level specification chain (a) using a probability distribution over neural network quality of service values (Q) ;
- sending a request of availability (Req) for a service level specifications (SLS) provided by a providers' network (NT) system (SYSp), to at least one provider system (SYSp) involved in the service level specification chain (a) ;
- if said service level specification chain (a) may be provided by all the provider's network (NT) systems (SYSp) :

    - sending said service level specification chain (a) at a determined reward (rw) to said customer equipment (Ceq) ;
    - if a negative answer for said service level specification chain (a) is received from said customer equipment (Ceq), resetting the reward (rw) ;
    - computing a desire response (DesO) of the set of chains of service level specifications (Ad) using the reward (rw), a discount factor ($\gamma$), the quality of service value ($O_{max}$) within the neural network (NNd) corresponding to the first service level specification chain ($a_{max}$) ;
    - determining errors coming from the computing of said desire response (DesO) and correcting said errors with a correction function (NNd.Co) ;

- if said service level specification chain (a) may not be provided by all the provider's network (NT) systems (SYSp), resetting the reward (rw).

2. A method (M) according to the previous claim 1, wherein the method further comprises for said profile of demand (d), identifying by said provider's network system (SYSp) a set of chains of service level specifications (Ad) such that each chain (a) satisfies said end-to-end quality of service constraints (QoS) to generate a neural network (NNd), said neural network (NNd) of a profile of demand (d) being composed of :

    - an input layer (u) with the service level specification chains (a) as input values ($a_u$);
    - a hidden layer(s) (v) with hidden values ($Y_v$) computed using an activation function (NNd.Fa) ;
    - an output layer (z) with output values ($O_z$) representing the quality of service values.

3. A method (M) according to the preceding claim 2, wherein the output values ($O_z$) are computing as following:

$$O_z = \sum_y Y_v . W1_{z,v}$$

where :

    - $Y_v$ are the hidden values;
    - $W1_{z,v}$ are first weights.

4. A method (M) according to any one of the previous claims 2 or 3, wherein the activation function ($NND.F_A$) is a sigmoid tangent equal to tanh

$(\sum_u a_u . W2^T_{v,u})$, where:

    - $a_u$ are the input values of the neural network (NNd) of the demand profile (d) ;
    - $W2^T_{v,u}$ are second weights.

5. A method (M) according to any one of the previous claims, wherein the correction function (NNd.Co) comprises:

    - for each output layer (z), computing a first factor ($\delta_z$) being equal to the desire response (DesO) minus the output value (Oz) ;
    - for each hidden layer (v), computing a second factor ($\delta_v$) being equal to

$$\frac{1}{\cosh^2(Yv)} . \sum_z \delta_z . W1_{z,v}$$ , where :

    - $Y_v$ are the hidden values ;
    - $\delta_z$ is the first factor ;
    - $W1_{z,v}$ a first weigh.

    - computing for each output layer (z) associated with a hidden layer (v) a first weigh $W1_{z,v}$ which is equal to $W1_{z,v} + \alpha_t + \delta_z + Y_v$ with $\alpha_t$ being a learning rate decreasing over time ;
    - computing for each hidden layer (v) associated with an input layer (u) a second weigh $W2_{v,u}$ which is equal to $W2_{v,u} + \alpha_t + \delta_v + Y_v$ with $\alpha_t$ being said learning rate decreasing over time, and $\delta_v$ being the second factor.

6. A system (SYS) for selecting a chain of service level specification (SLS) within a network (NT) according to end-to-end quality of service constraints profile of demand (d), said system comprising a processor unit

(UC) adapted to :

- receive a request (Rq) related to a profile of demand (d) from a customer equipment (Ceq), said profile of demand (d) comprising end-to-end quality of service constraints (QoS) ;
- for said request (Rq) :

- determining a first service level specification chain ($a_{max}$) based on a plurality of quality of service values (Q) within a neural network (NNd) associated with said profile of demand (d) ;
- for a given state (S) corresponding to said first set of chains of service level specifications (Ad) :

- selecting a service level specification chain (a) using a probability distribution over neural network quality of service values (Q) ;
- send a request of availability (Req) for a service level specifications (SLS) provided by a providers' network (NT) system (SYSp) to at least one provider system (SYSp) involved in the service level specification chain (a) ;
- if said service level specification chain (a) may be provided by all the provider's network (NT) systems (SYSp) :

- send said service level specification chain (a) at a determined reward (rw) to said customer equipment (Ceq) ;
- if a negative answer for said service level specification chain (a) is received from said customer equipment (Ceq), reset the reward (rw) ;
- compute a desire response (DesO) of the set of chains of service level specifications (Ad) using the reward (rw), a discount factor ($\gamma$), the quality of service value ($O_{max}$) within the neural network (NNd) corresponding to the first service level specification chain ($a_{max}$); and
- determine errors coming from the computing of said desire response (DesO) and correct said errors with a correction function (NNd.Co) ;

- if said service level specification chain (a) may not be provided by all the provider's network (NT) systems (SYSp), reset the reward (rw).

7. System according to the previous claim, wherein the processor unit (UC) is further adapted to, for said profile of demand's (d) request (Rq), identify a set of chains of service level specifications (Ad) such that each chain (a) satisfies said end-to-end quality of service constraints (QoS) to generate a neural network (NNd), said neural network (NNd) of a profile of demand (d) being composed of :

- an input layer (u) with the service level specification chains (a) as input values ($a_u$);
- a hidden layer(s) (v) with hidden values ($Y_v$) computed using an activation function (NNd.Fa) ;
- an output layer (z) with output values ($O_z$) representing the quality of service values.

8. A computer program product (PG) for a computer, comprising a set of instructions, which when loaded into said computer, causes the computer to carry out the method for selecting a chain of service level specification (SLS) according to end-to-end quality of service constraints profile of demand (D) as claimed in any one of claims 1 to 5.

**Amended claims in accordance with Rule 137(2) EPC.**

**1.** A method (M) for selecting a chain of service level specification within a network according to end-to-end quality of service constraints profile of demand, said method comprising :

- receiving a request by a provider's network system related to a profile of demand from a customer equipment, said profile of demand comprising end-to-end quality of service constraints ;
- for said request, performing by said provider's network system :

- determining a first service level specification chain based on a plurality of quality of service values within a neural network associated with said profile of demand ;
- for a given state corresponding to said first set of chains of service level specifications :

- selecting a service level specification chain using a probability distribution over neural network quality of service values ;
- sending a request of availability for a service level specifications provided by a providers' network system, to at least one provider system involved in the service level specification chain ;

- if said service level specification chain may be provided by all the provider's network systems :

- sending said service level specification chain at a determined reward to said customer equipment, said reward being a function representing the instantaneous revenue brought by the allocation of said service level specifications chain to said request ;
- if a negative answer for said service level specification chain is received from said customer equipment, resetting the rewa rd ;
- computing a desire response of the set of chains of service level specifications using the reward, a discount factor representing the importance of the future gains, the quality of service value within the neural network corresponding to the first service level specification chain ;
- determining errors coming from the computing of said desire response and correcting said errors with a correction function ;

- if said service level specification chain may not be provided by all the provider's network systems, resetting the reward.

**2.** A method (M) according to the previous claim 1, wherein the method further comprises for said profile of demand, identifying by said provider's network system a set of chains of service level specifications such that each chain satisfies said end-to-end quality of service constraints to generate a neural network, said neural network of a profile of demand being composed of :

- an input layer with the service level specification chains as input values ;
- a hidden layer(s) with hidden values computed using an activation function ;
- an output layer with output values representing the quality of service values.

**3.** A method (M) according to the preceding claim 2, wherein the output values are computing as following:

$$O_z = \sum_y Y_v.W1_{z,v}$$

where :

- $O_z$ are the output values;
- $Y_v$ are the hidden values;
- $W1_{z,v}$ are first weights.

**4.** A method (M) according to any one of the previous claims 2 or 3, wherein the activation function is a sigmoid tangent equal to tanh

$$(\sum_u a_u.W2^T_{v,u}),$$

where :

- $a_u$ are the input values of the neural network of the demand profile ;
- $W2^T_{v,u}$ are second weights.

**5.** A method (M) according to any one of the previous claims, wherein the correction function comprises:

- for each output layer, computing a first factor being equal to the desire response minus the output value ;
- for each hidden layer, computing a second factor being equal to

$$\frac{1}{\cosh^2(Yv)}.\sum_z \delta_z.W1_{z,v}$$ , where :

- $Y_v$ are the hidden values ;
- $\delta_z$ is the first factor ;
- $W1_{z,v}$ a first weigh.

- computing for each output layer associated with a hidden layer a first weigh $W1_{z,v}$ which is equal to $W1_{z,v} + \alpha_t + \delta_z + Y_v$ with $\alpha_t$ being a learning rate decreasing over time ;
- computing for each hidden layer associated with an input layer a second weigh $W2_{v,u}$ which is equal to $W2_{v,u} + \alpha_t + \delta_v + Y_v$ with $\alpha_t$ being said learning rate decreasing over time, and $\delta_v$ being the second factor.

**6.** A system (SYS) for selecting a chain of service level specification within a network according to end-to-end quality of service constraints profile of demand, said system comprising a processor unit (UC) adapted to :

- receive a request related to a profile of demand from a customer equipment, said profile of demand comprising end-to-end quality of service constraints ;
- for said request :

- determining a first service level specification chain based on a plurality of quality of service values within a neural network associated with said profile of demand ;
- for a given state corresponding to said first set of chains of service level specifications :

- selecting a service level specification chain using a probability distribution over neural network quality of service values ;
- send a request of availability for a service level specifications provided by a providers' network system to at least one provider system involved in the service level specification chain ;
- if said service level specification chain may be provided by all the provider's network systems :

- sending said service level specification chain at a determined reward to said customer equipment, said reward being a function representing the instantaneous revenue brought by the allocation of said service level specifications chain to said request ;
- if a negative answer for said service level specification chain is received from said customer equipment, reset the reward ;
- compute a desire response of the set of chains of service level specifications using the reward, a discount factor representing the importance of the future gains, the quality of service value within the neural network corresponding to the first service level specification chain ; and
- determine errors coming from the computing of said desire response and correct said errors with a correction function ;

- if said service level specification chain may not be provided by all the provider's network systems, reset the reward.

**7.** System according to the previous claim, wherein the processor unit (UC) is further adapted to, for said profile of demand's request, identify a set of chains of service level specifications such that each chain satisfies said end-to-end quality of service constraints to generate a neural network, said neural network of a profile of demand being composed of :

- an input layer with the service level specification chains as input values ;
- a hidden layer(s) with hidden values computed using an activation function ;
- an output layer with output values representing the quality of service values.

**8.** A computer program product (PG) for a computer, comprising a set of instructions, which when loaded into said computer, causes the computer to carry out the method for selecting a chain of service level specification according to end-to-end quality of service constraints profile of demand as claimed in any one of claims 1 to 5.

M

1   RX_Rq(d(QoS))

2   DEF_amax(Q, NNd)

a   ID_Ad

b   CREAT_NNd(Ad)->NNd.Fa=NNd.App(d, Ad)

3   SELECT_SLS(amax,Rand, 1-ε)

4   TX_REQ(NT, SLS)

Resp1

Y     N

5   TX_SLS(Ceq, rw)

5'   RESET_rw

Y     Resp2     N

6   RESET_rw

7   COMPUT_DesO(Ad, rw, δ,Omax)

8   ERR(NNd_Co)

$\alpha=1/t^{\omega}; \varepsilon = \varepsilon.e^{-t}$

Y   n=NEG_RD?   N

STOP

FIG.1

FIG. 2

FIG. 3

FIG. 4

**SYS**

**UC**

**PG**

| RX_Rq(d(QoS)) |

| DEF_amax(Q, NNd) |

| ID_Ad |

| CREAT_NNd(Ad)->NNd.Fa=NNd.App(d, Ad) |

| SELECT_SLS(amax, rand, 1-ε) |

| TX_REQ(NT, SLS) |

| TX_SLS(Ceq, rw) |

| RESET_rw |

| COMPUT_DesO(Ad, rw, δ,Omax) |

| ERR(NNd_Co) |

| $\alpha = 1/t^{\omega}$; $\varepsilon = \varepsilon.e^{-t}$ |

**FIG. 5**

Europäisches
Patentamt

European
Patent Office

Office européen
des brevets

## EUROPEAN SEARCH REPORT

**Application Number**

EP 11 19 5954

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/076992 A1 (GORIS ROB [NL] ET AL) 19 March 2009 (2009-03-19) * paragraph [0040] - paragraph [0041] * ----- | 1,6,8 | INV. H04L12/24 |
| A | EP 0 883 075 A2 (NORTHERN TELECOM LTD [CA]) 9 December 1998 (1998-12-09) * page 5, line 5 - line 15 * ----- | 1,6,8 | |

|  |  |
|---|---|
| | TECHNICAL FIELDS SEARCHED (IPC) |
| | H04L |

The present search report has been drawn up for all claims

| Place of search | Date of completion of the search | Examiner |
|---|---|---|
| The Hague | 4 June 2012 | Brichau, Gert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 19 5954

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2012

| Patent document cited in search report | | Publication date | Patent family member(s) | | Publication date |
|---|---|---|---|---|---|
| US 2009076992 | A1 | 19-03-2009 | NONE | | |
| EP 0883075 | A2 | 09-12-1998 | EP 0883075 | A2 | 09-12-1998 |
| | | | JP 11032085 | A | 02-02-1999 |

EPO FORM P0459

For more details about this annex : see Official Journal of the European Patent Office, No. 12/82